# EUROPEAN PATENT APPLICATION

(11) **EP 2 634 140 A1**
(43) Date of publication of application: **04.09.2013**
(21) Application number: 11836295.3
(22) Date of filing: 25.10.2011
(51) Int. Cl.: C01B 31/18

(54) **METHOD FOR PRODUCING CARBON MONOXIDE AND PRODUCTION APPARATUS**

(30) Priority: 26.10.2010 JP 2010240121
(71) Applicant: Mitsui Mining and Smelting Co., Ltd., Shinagawa-ku Tokyo 141-8584 (JP)
(72) Inventor: MYOI, Hajime, Ageo-shi Saitama 362-0021 (JP); YASHIMA, Isamu, Ageo-shi Saitama 362-0021 (JP); KANNO, Akihiro, Ageo-shi Saitama 362-0021 (JP); SHIBATA, Yousuke, Ageo-shi Saitama 362-0021 (JP); SENOO, Yuichi, Ageo-shi Saitama 362-0021 (JP); KINOSHITA, Kazuya, Ageo-shi Saitama 362-0021 (JP)
(74) Representative: Forstmeyer, Dietmar
(86) International application number: PCT/JP2011/074583
(87) International publication number: WO 2012/057162

(57) **Abstract**

The invention provides a process for producing carbon monoxide including contacting a carbon dioxide-containing gas with a metal oxide having oxygen ion conductivity and reversible oxygen deficiency under heating thereby reducing carbon dioxide by a stoichiometric reaction and producing carbon monoxide, wherein the metal oxide is cerium oxide containing zirconium. The ratio of the number of moles of zirconium to the total number of moles of cerium and zirconium in the zirconium-containing cerium oxide is preferably 0.001 to 0.5.

## Description

### Technical Field

This invention relates to a process and apparatus for producing carbon monoxide from carbon dioxide. The invention also relates to a converting agent used in the process.

### Background Art

Carbon dioxide is known as greenhouse gas. The carbon dioxide concentration in the atmosphere has ever been increasing, which is considered one of the causes of global warming. From the viewpoint of global warming prevention, therefore, techniques for recovering carbon dioxide emitted into the atmosphere are of great importance.

A technique for recovering carbon dioxide is proposed in patent literature 1 (see below), which includes decomposing carbon dioxide gas into carbon monoxide gas and oxygen gas using an oxygen-deficient iron oxide, returning the oxygen-deficient iron oxide to the original iron oxide with the produced oxygen gas, and collecting only the carbon monoxide gas.

The above described technique is based on a stoichiometric reaction between an oxygen-deficient iron oxide and carbon dioxide to produce carbon monoxide gas from carbon dioxide. Apart from this, techniques for obtaining carbon monoxide gas from carbon dioxide through catalytic reduction are also known. For example, non-patent literature 1 below reports that carbon monoxide gas and carbon can be produced by catalytic reduction of carbon dioxide using a metal oxide, such as WO₃, Y₂O₃, or ZnO, as a catalyst and hydrogen or methane as a reducing agent.

Aside from these techniques, patent literature 2 below discloses a method comprising separating carbon dioxide into carbon monoxide and oxygen using a solid-state reaction membrane having an oxygen ion conductor comprising CeO₂ and a catalyst. In this method, oxygen is separated from carbon dioxide using a catalyst supported on CeO₂ (oxygen ion conductor), and the released oxygen is allowed to diffuse in the oxygen ion conductor by the potential generated by the oxygen concentration difference.

Patent literature 3 below describes an oxygen ion-conducting ceramic conductor, which is a ceramic substance selected from the group consisting of Bi₂O₃, ZrO₂, CeO₂, and mixtures thereof and doped with a rare earth metal oxide and the like. The patent literature 3 proposes (a) contacting the oxygen ion-conducting ceramic conductor with carbon dioxide thereby saturating the oxygen ion-conducting ceramic conductor with oxygen and producing carbon monoxide and (b) contacting the oxygen-saturated, oxygen ion-conducting ceramic conductor with a hydrocarbon gas thereby removing oxygen from the oxygen-saturated, oxygen ion-conducting ceramic conductor. However, the literature is silent on the fact that zirconium-containing cerium oxide has reversible oxygen deficiency (oxygen vacancies) in the oxygen ion conducting ceramic conductor and that reversible oxygen deficiency is required in producing carbon monoxide from carbon dioxide.

### Citation List

### Patent Literature

Patent literature 1: JP 5-68853A
Patent literature 2: JP 2001-322958A
Patent literature 3: US 2002/0064494A1

### Non Patent Literature

Non-patent literature 1: Ishihara and Takita, "Development of catalyst for chemical fixation of carbon dioxide to solid carbon", Journal of Fine Chemical, vol. 21, No. 14, pp. 5-13 (1992).

### Summary of Invention

### Technical Problem

According to the technique of patent literature 1, carbon monoxide gas is certainly produced from carbon dioxide gas. However, because an iron oxide has low oxygen ion conductivity, the oxygen vacancies present inside the oxide could not be contacted by carbon dioxide gas once the surface is oxidized. Therefore, a large quantity of the oxygen-deficient iron oxide must be used in order to achieve an increased efficiency of carbon dioxide to carbon monoxide conversion, which will lead to economical disadvantage.

The technique of non-patent literature 1 requires feeding hydrogen or methane along with carbon dioxide, so that the reaction system contains not only carbon monoxide and carbon as a reaction product but unreacted carbon dioxide and hydrogen or methane and eventually needs a separation step, which leads to economical disadvantage. Moreover, when the reaction product is carbon, the catalytic activity is liable to decrease due to deposition of the carbon on the catalyst.

The technique of patent literature 2 is economically disadvantageous in that a noble metal catalyst is used to decompose carbon dioxide into carbon monoxide and oxygen. Furthermore, the cerium oxide supporting the noble metal catalyst only serves as an ion pump for diffusion oxygen ions and does not directly participate in production of carbon monoxide from carbon dioxide.

Accordingly, an object of the invention is to provide a process for producing carbon monoxide from carbon dioxide that can eliminate various disadvantages associated with the aforementioned conventional techniques.

### Solution to Problem

The invention provides a process for producing carbon monoxide. The process includes contacting a carbon dioxide-containing gas with a metal oxide having oxygen ion conductivity and reversible oxygen deficiency under heating thereby reducing carbon dioxide by a stoichiometric reaction and producing carbon monoxide. The metal oxide is cerium oxide containing zirconium.

The invention also provides an apparatus suited to carry out the process of the invention. The apparatus includes an outer tube and an inner tube disposed in the outer tube. The inner tube is formed of a material comprising a metal oxide having oxygen ion conductivity and reversible oxygen deficiency. The apparatus is configured to allow a carbon dioxide-containing gas to flow between the outer tube and the inner tube and to allow a reducing gas to flow through the inner tube or configured to allow a reducing gas to flow between the outer tube and the inner tube and to allow a carbon dioxide-containing gas to flow through the inner tube. The metal oxide is cerium oxide containing zirconium.

The invention also provides another apparatus suited to carry out the process of the invention. The apparatus includes an alternate stack of at least one plate-shaped member formed of a material containing a metal oxide having oxygen ion conductivity and reversible oxygen deficiency and at least one plate-shaped separators. Each side of each separator is provided with alternate ribs and grooves, each rib and each groove extending in one direction. The apparatus is configured to allow a carbon dioxide-containing gas to flow through the grooves of one of the separators facing each other with the plate-shaped member therebetween, the groove being located on the side of the separator facing to the plate-shaped member. The apparatus is also configured to allow a reducing gas to flow through the grooves of the other separator located on the side of the separator facing the plate-shaped member. The metal oxide is cerium oxide containing zirconium.

The invention also provides a system for converting carbon dioxide to carbon monoxide including contacting an exhaust gas containing carbon dioxide emitted from a steel plant, a refinery, or a heat power plant with a metal oxide having oxygen ion conductivity and reversible oxygen deficiency under heating using waste heat generated from the steel plant, the refiner, or the heat power plant thereby reducing carbon dioxide in the exhaust gas by a stoichiometric reaction and producing carbon monoxide. The metal oxide is cerium oxide containing zirconium.

The invention also provides a converting agent for converting carbon dioxide to carbon monoxide. The converting agent contains a metal oxide having oxygen ion conductivity and reversible oxygen deficiency. The metal oxide is cerium oxide containing zirconium.

### Advantageous Effects of Invention

According to the invention, carbon monoxide is efficiently produced from carbon dioxide without by-producing carbon. To particular advantage, the zirconium-containing cerium oxide that can be used in the invention lowers the temperature for including the reaction of carbon dioxide to produce carbon monoxide and also lowers the temperature for generating oxygen vacancies as compared with zirconium-free cerium oxide. There is not necessarily a correlation between the temperature at which the reaction producing carbon monoxide occurs and the temperature at which oxygen vacancies are provided. The factors allowing for efficient production of carbon monoxide include not only the low temperature for introducing oxygen vacancies but also the lowered temperature for including the reaction producing carbon monoxide from carbon dioxide by virtue of the presence of zirconium.

### Brief Description of Drawings

[Fig. 1] Fig. 1 schematically illustrates an apparatus suitably used in the production of carbon monoxide according to the invention.
[Fig. 2] Fig. 2 schematically illustrates another apparatus suitably used in the production of carbon monoxide according to the invention.
[Fig. 3] Fig. 3 schematically illustrates still another apparatus suitably used in the production of carbon monoxide according to the invention.
[Fig. 4] Fig. 4 schematically illustrates the apparatus used in Examples.
[Fig. 5] Fig. 5 is a TG curve obtained using a simultaneous TG/DT analyzer, from which T_{red} and T_{CO2} are determined.

### Description of Embodiments

The invention will be described based on its preferred embodiments. In the invention, a carbon dioxide-containing gas is contacted with a specific metal oxide under heating to produce carbon monoxide gas. The specific metal oxide will hereinafter be referred to as a converting agent for converting carbon dioxide to carbon monoxide or simply a converting agent. The reaction between the converting agent and carbon dioxide gas is a stoichiometric reaction making use of the reducing power of the converting agent. That is, the converting agent comprising the metal oxide is not used as a catalyst but serves as a reactant. In the invention, zirconium-containing cerium oxide is used as the specific metal oxide.

The converting agent comprising the specific metal oxide has oxygen ion conductivity and reversible oxygen deficiency (oxygen vacancies). The reversible oxygen deficiency of the converting agent accounts for the reducing properties of the converting agent on carbon dioxide. Reversible oxygen deficiency is provided as a result of forcibly removing or drawing oxygen from a metal oxide by treatment under a strong reducing condition. Reversible deficiency is vacancies that can take up oxygen. For example, in the case when the metal oxide is zirconium-containing cerium oxide having reversible deficiency, the charge unbalance caused by oxygen deficiency is compensated for by the reduction of part of tetravalent cerium to trivalent cerium. Trivalent cerium is labile and tends to restore tetravelence. Therefore, trivalent cerium takes up oxygen into its vacant sites thereby returning to be tetravalent, whereby the charge balance is always kept. Oxygen vacancies disappear on taking up oxygen into the vacant sites but are restored by treating under a strong reducing condition. As used herein, the term "reversible oxygen deficiency" is used in that sense.

On the other hand, irreversible oxygen deficiency is also known. Irreversible oxygen deficiency is provided by doping a metal oxide with an element with a smaller valence than the metal. Unlike reversible oxygen deficiency, the irreversible oxygen deficiency is not a deficiency caused by the treatment under a strong reducing condition. Irreversible oxygen deficiency is introduced by, for example, mixing a metal oxide with an oxide of an element with a lower valence than the metal and firing the mixture in the atmosphere or otherwise substituting with the element having a lower valency to form a substitutional solid solution. When the inorganic oxide is cerium oxide, for example, all the cerium atoms in cerium oxide having irreversible oxygen vacancies are tetravalent, so that the deficient sites do not take up oxygen. In the case of a CeO₂ solid solution containing, for example, 20 mol% Ca as a solute element, seeing that the average valence of the cations is 4×0.8+2×0.2 = 3.6, the number of oxygen atoms necessary to balance the charge of oxygen with this valence is 3.6/2 = 1.8. This value is smaller than the stoichiometric number of oxygen atoms (i.e., 2), resulting in an oxygen deficiency However, this oxygen deficiency is not of the type that is made up for by oxygen absorption. Thus, irreversible oxygen deficiency is not a result of forcibly removing oxygen but is caused by electrical charge compensation in a metal oxide.

The converting agent comprising the above discussed metal oxide that can be used in the invention has oxygen ion conductivity as described. It may only be necessary that oxygen ion conductivity be exhibited at a temperature of carrying out the process of the invention. Since the converting agent has oxygen ion conductivity, almost all the reversible oxygen vacancies in the converting agent are made effective use of for the reaction with carbon dioxide for the following reason. Because the process of the invention is based on the reaction between a solid metal oxide and gaseous carbon dioxide, the reaction proceeds predominantly on the surface of the solid. The oxygen vacancies present on the metal oxide surface disappear on binding to oxygen of carbon dioxide, whereupon carbon dioxide is converted to carbon monoxide. Since the metal oxide has oxygen ion conductivity, the oxygen bound to the oxygen vacancies on the metal oxide surface moves in the form of oxygen ion (O²⁻) to the inside of the metal oxide, whereby the oxygen vacancies in the inside disappear, and reversible oxygen vacancies appear again on the surface of the metal oxide. The disappearance and reproduction of oxygen vacancies repeatedly occur so that almost all the reversible oxygen vacancies present in the converting agent are made to contribute to the reaction with carbon dioxide. In contrast to this, in the case of the iron oxide having oxygen deficiency according to patent literature 1 described in Background Art, once all the oxygen vacancies present on the surface of the oxide disappear, the reactivity with carbon dioxide decreases considerably even though oxygen vacancies still exist inside the oxide because of the lack of oxygen ion conductivity of the oxide.

For the converting agent comprising the metal oxide used in the invention to have oxygen ion conductivity provides the following additional advantage. Since the reversible oxygen vacancies present not only on the surface but in the inside of the converting agent are contributory to the reaction with carbon dioxide, the converting agent is less likely to reduce its reactivity with carbon dioxide without excessively increasing its specific surface area. Therefore, there is freedom that a reactant containing the converting agent may be formed into a desired shape, such as granules, pellets, plates, or columns. In the case of the iron oxide having oxygen deficiency of patent literature 1 described in Background Art, in contrast, the oxygen vacancies present inside the iron oxide hardly contribute to the reaction with carbon dioxide. If the inside oxygen vacancies should be made effective use of, it is necessary to considerably increase the specific surface area of the oxide. In other words, the iron oxide should be used in the form of fine powder, which has poor handling properties and lowers the design flexibility of reaction equipment.

As stated, it is essential for the converting agent comprising the metal oxide that can be used in the invention to have oxygen ion conductivity and reversible oxygen deficiency. In the present invention, zirconium-containing cerium oxide is used as a metal oxide having such properties. Zirconium may exist in cerium oxide either as a solute element in a solid solution or in the form of oxide. Generally speaking, zirconium tends to exist as a solute element when present in a low concentration in cerium oxide.

In using zirconium-containing cerium oxide as the metal oxide, the ratio of the number of moles of zirconium to the total number of moles of cerium and zirconium is preferably 0.001 to 0.7, more preferably 0.001 to 0.5, even more preferably 0.002 to 0.25, and yet even more preferably 0.02 to 0.2. With the ratio of zirconium ranging within that range, the effect of lowering the temperature at which the zirconium-containing cerium oxide reacts with carbon dioxide is ensured so that carbon monoxide is efficiently produced from carbon dioxide. In addition, the temperature of the heat treatment in a reducing atmosphere, which is, as will be described later, performed to restore oxygen vacancies in the zirconium-containing cerium oxide whose oxygen vacancies have been stuffed as a result of the reaction with carbon dioxide, is also lowered. Zirconium-containing cerium oxide having the above recited molar ratio of zirconium can be obtained by properly adjusting the amounts of cerium and zirconium in the hereinafter described preparation of zirconium-containing cerium oxide.

The zirconium-containing cerium oxide for use in the process of the invention may be doped with one or more elements selected from Bi and an alkaline earth metal element. The alkaline earth metal element preferably includes one or more elements selected from Mg, Ca, Sr, and Ba. Incorporating the dopant element to the zirconium-containing cerium oxide produces the effect that the reaction temperature of strong reduction of zirconium-containing cerium oxide to form oxygen vacancies is further lowered. The ratio of the dopant element(s), if incorporated, to the total number of moles of cerium, zirconium, and the element(s) is preferably 0.001 to 0.3, more preferably 0.001 to 0.2, even more preferably 0.02 to 0.2.

The zirconium-containing cerium oxide is preferably produced by, for example, the following process. Cerium carbonate and zirconium carbonate are mixed and ground in a media mill, e.g., a ball mill. The resulting mixed powder is calcined in an atmospheric environment. The calcination is preferably carried at 150° to 600°C, more preferably 250° to 500°C, for 0.5 to 10 hours, more preferably 2 to 10 hours. The calcination product is ground in, e.g., a mortar, and the resulting powder are fired in an atmospheric environment preferably at 400° to 1500°C, more preferably 1000° to 1500°C, even more preferably 1000° to 1400°C. The firing temperature is set higher than the calcination temperature. The firing time is preferably 0.5 to 10 hours, more preferably 2 to 10 hours, provided that the firing temperature is within the range recited above. By this operation there is obtained zirconium-containing cerium oxide not yet having reversible oxygen vacancies.

Instead of the above process, zirconium-containing cerium oxide not yet having reversible oxygen vacancies may also be obtained by firing a commercially available complex oxide composed of cerium oxide and zirconium oxide under the same conditions as described above. Such a complex oxide is available from, for example, Anan Kasei Co., Ltd.

The zirconium-containing cerium oxide obtained by the above described processes is subjected to strong reduction to introduce reversible oxygen deficiency thereby producing zirconium-containing cerium oxide having reversible vacancies that can be used in the production process of the invention. A hydrogen-containing atmosphere having a hydrogen concentration at or above the lower explosion limit, preferably of 20% by volume or higher, is used as a reducing atmosphere for the strong reduction. The hydrogen concentration can of course be 100% by volume. The inventors' study revealed that a relatively low temperature suffices to accomplish the strong reduction. The inventors consider that this is probably because of the addition of zirconium to cerium oxide. When, in particular, zirconium is present as a solid solute in cerium oxide, reversible oxygen deficiency takes place successfully to advantage even at a low temperature in strong reduction. The temperature for strong reduction is preferably 300° to 1050°C, more preferably 320° to 820°C, even more preferably 350° to 820°C, and yet even more preferably 400° to 820°C. The reaction time for strong reduction is preferably 0.5 to 10 hours, more preferably 2 to 10 hours, provided that the temperature is in the range recited.

Known metal oxides capable of oxygen absorption include OSC (oxygen-storage capacity) materials in addition to the metal oxide having reversible oxygen deficiency that can be used in the invention. An OSC material is frequently used as a promoter of automotive ternary catalysts. An OSC material works to stabilize exhaust gas purification using a ternary catalyst. In the purification of exhaust gas, the oxygen ion conductivity and valence change of cerium oxide of an OSC material are taken advantage of in releasing oxygen in an oxidation reaction and absorbing oxygen in a reduction reaction, thereby stabilizing the composition of exhaust gas. Therefore, an OSC material serves as a promoter for converting carbon monoxide to carbon dioxide. That is, it is used in a reaction process opposite to the process of producing carbon monoxide from carbon dioxide as in the invention.

The reaction between the converting agent used in the invention and a carbon dioxide-containing gas is carried out while heating. It is desirable to set the heating temperature within the range of, e.g., from 295° to 1000°C, preferably 400° to 1000°C, more preferably 400° to 800°C, even more preferably 400° to 600°C, in terms of enhancement of carbon dioxide-to-carbon monoxide conversion efficiency and effective prevention of the converting agent from being reduced by the action of once produced carbon monoxide to produce carbon dioxide. The reaction may be performed either batchwise or continuously In the case of a batch reaction, given that the reaction is stoichiometric, the converting agent is preferably used in an amount of at least an equivalent, more preferably 3 equivalent or more, per equivalent of carbon dioxide. As used herein, the term "an equivalent" indicates that, when the converting agent is zirconium-containing cerium oxide represented by Ce_{(1-y)}ZryO₍₂₋ₓ₎ (where 0<y<1; 0≤x<2), x mol of carbon dioxide reacts on the zirconium-containing cerium oxide to produce x mol of carbon monoxide.

The converting agent may be brought into contact with a carbon dioxide-containing gas in various forms. In the case of using a batch reactor, the converting agent in powder form may be placed or packed in the reactor to carry out the reaction. Granules granulated from the converting agent or packing materials molded from the converting agent, such as pellets, lumps, plates, honeycombs, Raschig rings, and berl saddles, may be used as placed or packed in the batch reactor. In the case of a continuous type reactor, the converting agent may be formed into a dense structure having a cylindrical, plate-like, discotic, or a like shape and configured to provide a reaction surface for converting carbon dioxide to carbon monoxide and a regenerating surface for reproducing oxygen vacancies with a reducing gas, the reaction surface and the regenerating surface being isolated from each other. In any of the forms described, the inventors have confirmed that carbon is not by-produced by the reaction between the converting agent and carbon dioxide.

The carbon dioxide-containing gas to be contacted with the converting agent may be 100% carbon dioxide gas or a mixture of carbon dioxide gas and one or more other gases. Examples of the other gases include oxygen, nitrogen, carbon monoxide, methane, and acetylene. In the case of the mixed gas, the carbon dioxide concentration is not particularly limited but is preferably 1% or more by volume, more preferably 15% or more by volume, in the interest of cost. When the mixed gas contains oxygen, the proportion of oxygen in the total gas feed is desirably as small as possible.

Specific examples of the carbon dioxide-containing gas include a gas emitted from a blast furnace, which is hereinafter referred to as blast furnace gas, and a gas emitted from a converter, which is hereinafter referred to as converter gas. Blast furnace gas is a gas by-produced in the production of pig iron in a blast furnace and mainly comprising nitrogen, carbon monoxide, and carbon dioxide. Blast furnace gas contains about 52 to 53 vol% nitrogen, about 18 to 25 vol% carbon monoxide, and about 20 to 24 vol% carbon dioxide. Converter gas is a gas by-produced in the production of steel in a converter and mainly comprising carbon monoxide and carbon dioxide. Converter gas contains about 50 to 80 vol% carbon monoxide and about 15 to 17 vol% carbon dioxide.

In the production process of the invention, the converting agent having been oxidized by the contact with carbon dioxide is preferably contacted with a reducing gas to be regenerated. The temperature of contacting the converting agent with a reducing gas is, for example, preferably 300° to 1050°C, more preferably 320° to 820°C, even more preferably 350° to 820°C, and yet even more preferably 400° to 820°C. The reducing agent may be a hydrogen-containing gas or an acetylene-containing gas as will be described later. The hydrogen-containing gas is exemplified by a gas emitted from a coke oven, which is hereinafter referred to as coke oven gas. Coke oven gas is a gas by-produced in the production of cokes in a coke oven and mainly comprising hydrogen and methane. Coke oven gas contains about 50 to 60 vol% hydrogen and about 25 to 30 vol% methane.

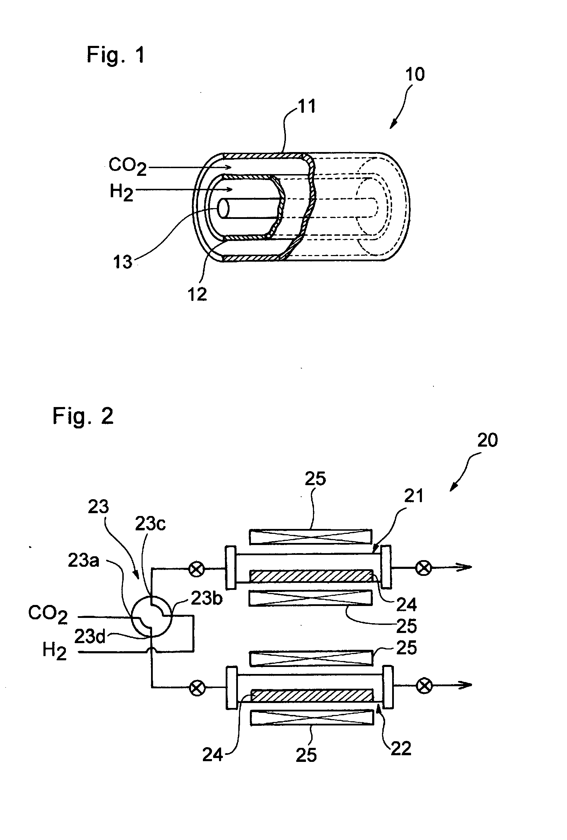

Fig. 1 schematically illustrates an apparatus for producing carbon monoxide that can be suitably used in the production process of the invention. The apparatus illustrated is of continuous type and has a double tube structure. In detail, the apparatus 10 shown in Fig. 1 includes an outer tube 11 and an inner tube 12 disposed inside the outer tube 11. The inner tube 12 is interiorly equipped with a heater 13. A material of the inner tube 12 contains the above described converting agent. A carbon dioxide-containing gas is allowed to flow in the space between the outer tube 11 and the inner tube 12. While the carbon dioxide-containing gas is flowing in the space, carbon dioxide and the converting agent react with each other to produce carbon monoxide.

The apparatus 10 shown in Fig. 1 is configured to allow a carbon dioxide-containing gas to flow in the space between the outer tube 11 and the inner tube 12 and to allow a reducing gas to flow through the inner tube 12 (on Fig. 1 H₂ is shown as a typical example of a reducing gas). This apparatus construction allows carbon dioxide to contact the converting agent and remove oxygen from the converting agent and allows the resultant oxygen-deficient converting agent to restore oxygen vacancies. Thus, the apparatus 10 allows the carbon dioxide to contact with (oxidize) the converting agent to produce carbon monoxide and then makes the thus oxidized converting agent contact with a reducing gas to conduct strong reduction and regenerate the metal oxide. It is the oxygen ion conductivity possessed by the converting agent that allows for such a continuous operation of regeneration. A hydrogen-containing gas or an acetylene-containing gas may be used as a reducing gas, with a hydrogen-containing gas being preferred. The hydrogen concentration in a reducing gas is preferably at or above the lower explosion limit up to 100 vol%, more preferably 20 to 100 vol%. As earlier described, a relatively low temperature suffices for the treatment owing to, as previously stated, the presence of zirconium in cerium oxide. The treating temperature is preferably 300° to 1050°C, more preferably 320° to 820°C, even more preferably 350° to 820°C, yet even more preferably 400° to 820°C. The strongly reducing gas is usually at ambient pressure.

While the apparatus of Fig. 1 has the heater 13 inside the inner tube 12, the heater may be disposed around the outer tube 11. Because the temperature for forcibly drawing oxygen from the oxidized converting agent is generally higher than the temperature inducing the reaction between carbon dioxide and the converting agent, it is to advantage to place the heater 13 inside the inner tube 12 in terms of ease of drawing oxygen. Seeing that the temperature for forcibly drawing oxygen is permitted to be set low by virtue of the presence of zirconium in the converting agent as compared with the case where cerium oxide does not contain zirconium, it is possible that the temperature for causing carbon dioxide to react with the converting agent and the temperature for strongly reducing the oxidized converting agent are almost equal. Therefore, restriction of where to place the heater 13 is small. That is, the apparatus 10 has high design flexibility.

While, in the apparatus shown in Fig. 1, the carbon dioxide-containing gas and the reducing gas flow in the same direction, they may flow in the opposite directions. In a modification, the apparatus of Fig. 1 may be configured such that the reducing gas flows through the space between the outer tube 11 and the inner tube 12 and that the carbon dioxide-containing gas flows through the inner tube 12. In the modification, the heater is preferably placed around the outer tube 11 to efficiently regenerate the converting agent making up the inner tube 12.

The apparatus 20 illustrated in Fig. 2 includes two batch reactors 21 and 22 and a changeover valve 23. The changeover valve 23 has input ports 23a and 23b for connecting to a carbon dioxide-containing gas source and a reducing gas (on Fig. 2 H₂ is shown as a typical example) source, respectively. The changeover valve 23 also has output ports 23c and 23d for connecting to the reactors 21 and 22, respectively. The reactors 21 and 22 are each configured to have the converting agent put therein. A heater 25 is disposed around each of the reactors 21 and 22.

The apparatus 20 illustrated in Fig. 2 is configured to selectively and simultaneously feed the carbon dioxide-containing gas and the reducing gas to the reactors 21 and 22 via the changeover valve 23. In addition to this, the changeover valve 23 may operate to switch over between different gases.

The apparatus of Fig. 2 operates as follows. The changeover valve 23 is first set at the position shown so that the carbon dioxide-containing gas may be fed to the second reactor 22, with the reducing gas being fed to the first reactor 21. While the heaters 25 are heating the respective reactors 21 and 22, the reducing gas and the carbon dioxide-containing gas are fed to the reactors 21 and 22, respectively. Whereupon the converting agent 24 placed inside the first reactor 21 is strongly reduced to be forcibly deprived of oxygen and to provide reversible oxygen deficiency. In the second reactor 22, on the other hand, carbon dioxide reacts with the converting agent 24 that has previously been strongly reduced to produce carbon monoxide and, accordingly, the number of oxygen vacancies in the converting agent 24 decreases gradually When the production of carbon monoxide in the second reactor 22 comes to decrease, the changeover valve 23 is switched so as to feed the carbon dioxide-containing gas and the reducing gas to the first reactor 21 and the second reactor 22, respectively. At this time, the converting agent 24 in the first reactor 21 that has not yet contacted carbon dioxide has high activity. On contact between the converting agent 24 in the first reactor 21 and carbon dioxide, the production of carbon monoxide then turns up. In the second reactor 22, on the other hand, the converting agent 24 that has reduced activity as a result of the decrease in oxygen vacancies is strongly reduced, whereby oxygen is forcibly drawn to result in the reproduction of reversible oxygen vacancies in the converting agent 24.

In the apparatus 20 of Fig. 2, the heating temperature of the first reactor 21 and that of the second reactor 22 may be the same or different. Because the temperature for forcibly drawing oxygen from the oxidized converting agent 24 is generally higher than the temperature inducing the reaction between carbon dioxide and the converting agent 24, it is to advantage to set the heating temperature of the reactor to which the reducing gas is fed higher than that of the reactor where carbon monoxide is produced. Nevertheless, the temperature for causing carbon dioxide-containing gas to react with the converting agent 24 and the temperature for strongly reducing the oxidized converting agent 24 may be set almost equal by virtue of the presence of zirconium in the converting agent 24. Therefore, the heating temperatures of the first reactor 21 and the second reactor 22 can be decided with no particular restrictions. That is, the apparatus 20 has high design flexibility.

Thus, by performing the reaction between carbon dioxide gas and the converting agent 24 alternately in the first reactor 21 and the second reactor 22, it is feasible to produce carbon monoxide semi-continuously while regenerating the converting agent 24. While the apparatus 20 shown in Fig. 2 includes two batch reactors, it may include three or more reactors.

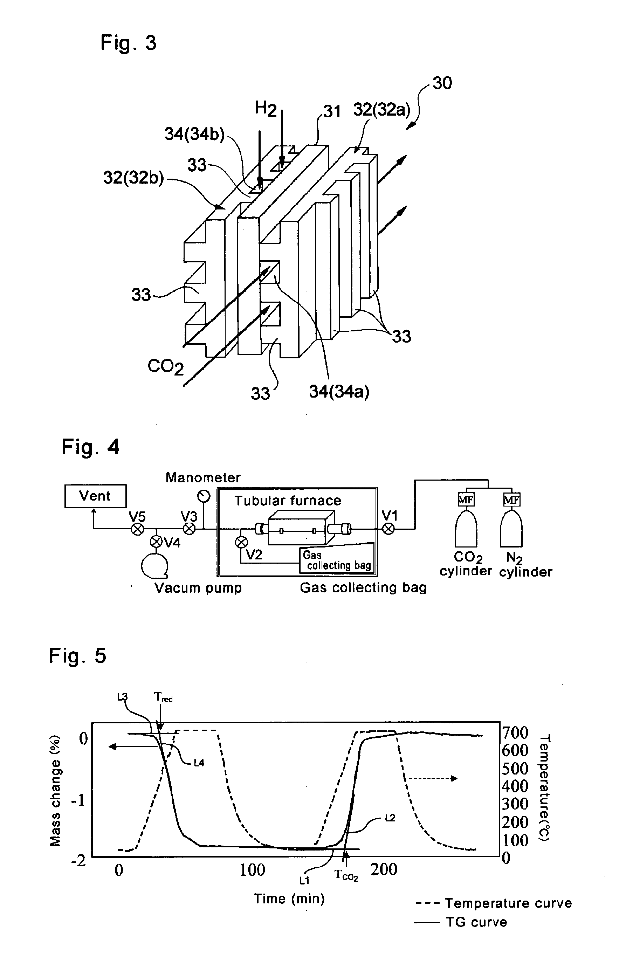

The apparatus 30 illustrated in Fig. 3 includes an alternate stack of at least one plate-shaped member 31 formed of a material containing the converting agent of the invention and at least one plate-shaped separators 32. Each side of each separator 32 is provided with alternate ribs 33 and grooves 34, each rib and each groove extending in one direction. By this configuration, spaces for allowing a gas to flow therethrough are formed by the grooves 34 between the plate-shaped member 31 and a pair of separators that face each other with the plate-shaped member 31 therebetween. While not shown, the apparatus 30 is equipped with a heater around the stack structure.

The apparatus 30 of Fig. 3 operates as follows. With the stack structure being heated to a predetermined temperature by means of the unshown heater, a carbon dioxide-containing gas is allowed to flow through the grooves 34a of the separator 32a, one of the separators 32a and 32b facing each other with the plate-shaped member 31 therebetween, which grooves 34a are located on the side of the separator 32a facing to the plate-shaped member 31. While the carbon dioxide-containing gas is flowing though the grooves 34a, carbon dioxide reacts with the converting agent contained in the plate-shaped member 31 to produce carbon monoxide. The apparatus 30 is configured so that a reducing gas (on Fig. 3 H₂ is shown as a typical example of a reducing gas) is allowed to flow through the grooves 34b located between the other separator 32b and the facing side of the plate-shaped member 31, whereby oxygen is removed from the converting agent that has been oxidized by the contact with carbon dioxide to restore once filled oxygen vacancies. Thus, the apparatus 30 achieves production of carbon monoxide as a result of contact between a carbon dioxide-containing gas and the converting agent and regeneration of oxygen-deficient metal oxide by strongly reducing, with a reducing gas, the converting agent having been oxidized by the contact with carbon dioxide-containing gas.

In the apparatus 30 of Fig. 3, the direction of the extension of the alternating ribs 33 and grooves 34 on one side of each separator 32 and that on the other side are perpendicular to each other. The extending directional relationship of the alternating ribs 33 and grooves 34 on two sides of the separator is not limited thereto. For example, the extending direction of the ribs 33 and grooves 34 on one side and that on the other side may intersect each other at other than 90 degrees or may be the same. When the extending direction of the ribs 33 and grooves 34 on one side and that on the other side are the same, the flow direction of the gas through the grooves 34 on one side of the separator 32 and that on the other side may be the same or opposite.

The description of the apparatus illustrated in Fig. 1 applies as appropriate to the undescribed details of the apparatus illustrated in Figs. 2 and 3.

The invention also provides a system for converting carbon dioxide to carbon monoxide using the converting agent of the invention. The system includes contacting an exhaust gas containing carbon dioxide that is emitted from a steel plant, a refinery, or a heat power plant, which are main sources of carbon dioxide in industry, with the converting agent of the invention. Examples of the exhaust gas containing carbon dioxide discharged from a steel plant, a refinery, or a heat power plant include blast furnace gas and converter gas. The contact between the carbon dioxide-containing exhaust gas and the converting agent is performed under heating making use of the waste heat generated from a steel plant, a refinery, or a heat power plant, which is advantageous to increase energy efficiency. Carbon monoxide is produced on contact under this heating. The system not only controls emission of carbon dioxide into the atmosphere but also provides to advantage a raw material (carbon monoxide) that can be effectively utilized in C1 chemistry. Otherwise, the produced carbon monoxide may be returned for reuse to, for example, a blast furnace of a steel plant.

A steel plant or a refinery emits a hydrogen-containing gas as well as a carbon dioxide-containing exhaust gas. In particular, a steel plant generates a large quantity of a hydrogen-containing gas. The hydrogen-containing gas can be used to regenerate the converting agent that has been oxidized by the contact with carbon dioxide. By so doing, the converting agent with reversible oxygen deficiency is obtained without separately preparing hydrogen gas, which further increases energy efficiency to advantage. The hydrogen-containing gases produced in steel plants and refineries are exemplified by coke oven gas. Since regeneration of the converting agent (restoration of reversible oxygen deficiency) is achieved at a lowered temperature by virtue of the presence of zirconium, there is an advantage that the regeneration may be effected successfully by making use of the waste heat from a refinery, a steel plant, or a heat power plant. The facilities to which the system of the invention is applicable are not limited to steel plants and refineries. The system is advantageously applicable to those facilities which by-produce large quantities of hydrogen, such as plants having a coke oven.

### Examples

The present invention will now be illustrated in greater detail with reference to Examples, but it should be understood that the invention is not deemed to be limited thereto. Unless otherwise noted, all the percents are by mass.

### Example 1

### (1) Preparation of zirconium-containing cerium oxide having reversible oxygen deficiency

### (1-a) Synthesis of zirconium-containing cerium oxide

Powdered cerium/zirconium complex oxide (from Anan Kasei Co., Ltd.), a preparation containing zirconium in a ratio of 0.25 to the total number of moles of cerium and zirconium, weighing 50 g was put in a heating furnace and fired in an air flow of 0.5 L/min by heating from room temperature to 1400°C at a rate of 5°C/min, at which the temperature was kept for 2 hours, followed by allowing to cool to obtain zirconium-containing cerium oxide with no reversible oxygen deficiency. XRD analysis of the zirconium-containing cerium oxide revealed only the diffraction peak assigned to CeO₂ with no peaks assigned to ZrO₂, which indicated that the zirconium dissolved in solid state in cerium oxide.

### (1-b) Synthesis of zirconium-containing cerium oxide with reversible oxygen deficiency

The zirconium-containing cerium oxide obtained in (1-a) above (50 g) was placed in a heating furnace capable of atmosphere control and heated in a flow of 100 vol% hydrogen gas to be reduced. The heating was carried out by elevating the temperature at a rate of 5°C/min from room temperature up to 600°C, at which the heating was continued for 3 hours, followed by spontaneous cooling. The hydrogen gas flow rate was 1.5 L/min. There was thus obtained zirconium-containing cerium oxide having reversible oxygen deficiency.

### (2) Evaluation of carbon dioxide gas to carbon monoxide gas conversion

The apparatus illustrated in Fig. 4 was used. A tubular furnace in which 8.5 g of the zirconium-containing cerium oxide with reversible oxygen deficiency obtained in (1) above had been put was placed in a glove box under nitrogen atmosphere. The tubular furnace was evacuated with the valve V5 closed and all the other valves open. In that state, the valve V1 was closed, and the tubular furnace was heated to 600°C. After the valves V2 and V3 were closed, evacuation of the tubular furnace was stopped. The valve V4 was closed, and carbon dioxide gas (100 vol%) was fed to the tubular furnace. The amount of carbon dioxide fed was 280 ml (0°C, 1 atm). The valve V1 was closed, and the system was left to stand for 1 hour. The valve V2 was opened, and nitrogen gas was fed into the tubular furnace until the gas collecting bag swelled a little. Subsequently, the valve V2 was closed, and the gas collecting bag was heat-sealed and separated from the pipe. In that state, the tubular furnace was allowed to cool to room temperature. After the cooling, the valve V1 was opened to feed nitrogen gas into the tubular furnace until the inner pressure increased to atmospheric pressure. Finally, the valves V3 and V5 were opened, and carbon monoxide was purged from the tubular furnace with nitrogen gas. The collected reaction gas was analyzed qualitatively and quantitatively by gas chromatography. Carbon dioxide-to-carbon monoxide conversion at 600°C was determined and rated "pass" if 0.5% or more carbon dioxide was converted to carbon monoxide or "fail" if less than 0.5% carbon dioxide was converted to carbon monoxide.
Separately, carbon dioxide to carbon monoxide conversion at 400°C was evaluated in the same manner as described above, except for lowering the heating temperature in the tubular furnace to 400°C. The results obtained are shown in Table 1 below.

### (3) Reaction temperature with carbon dioxide

The temperature at which the zirconium-containing cerium oxide used in Example 1 reacted with carbon dioxide (hereinafter referred to as T_{CO2}) was determined by the method below. The results obtained are shown in Table 1.

A simultaneous TG/DT analyzer, EXSTAR 6000 (available from SII Nanotechnology Co., Ltd.) was used. Zirconium-containing cerium oxide having no reversible oxygen deficiency (30 mg) was heated in a reducing gas atmosphere (4 vol% hydrogen and 96 vol% nitrogen mixed gas) at a rate of temperature rise of 20°C/min up to 700°C and kept at that temperature for 30 minutes to be reduced to give zirconium-containing cerium oxide with reversible oxygen deficiency. The flow rate of the reducing gas was 300 ml/min. After the temperature was dropped to room temperature at a rate of 40°C/min, it was raised again at the same rate of temperature rise under a flow of 300 ml/min of carbon dioxide gas (100 vol%) to cause the zirconium-containing cerium oxide with reversible oxygen deficiency to react with carbon dioxide gas. The change of mass of the zirconium-containing cerium oxide with reversible oxygen deficiency was recorded. The temperature at which a mass increase due to oxygen binding was observed was taken as T_{CO2}. As shown in Fig. 5, T_{CO2} is a temperature at the intersection between the tangent line L1 before the onset of the mass increase and the tangent line L2 after the onset of the mass increase.

### (4) Temperature of providing oxygen deficiency

The temperature at which the zirconium-containing cerium oxide having no reversible oxygen deficiency used in Example 1 acquires reversible oxygen deficiency (hereinafter referred to as T_{red}) was determined by the method below. The results are shown in Table 1.

A simultaneous TG/DT analyzer, EXSTAR 6000 (available from SII Nanotechnology Co., Ltd.) was used. Zirconium-containing cerium oxide having no reversible oxygen deficiency weighing 30 to 35 mg was heated at a rate of temperature rise of 20°C/min in a reducing gas atmosphere (4 vol% hydrogen and 96 vol% nitrogen mixed gas) flowing at a rate of 300 ml/min. The temperature at which a change in mass due to oxygen release was taken as T_{red}. As shown in Fig. 5, T_{red} is a temperature at the intersection between the tangent line L3 before the onset of the mass decrease and the tangent line L4 after the onset of the mass decrease.

### Examples 2 and 3

Zirconium-containing cerium oxide with no reversible oxygen deficiency and zirconium-containing cerium oxide with reversible oxygen deficiency were obtained in the same manner as in Example 1, except for changing the ratio of zirconium to the total number of moles of cerium and zirconium as shown in Table 1. The resulting zirconium-containing cerium oxide with no reversible oxygen deficiency was evaluated for T_{red} and T_{CO2} in the same manner as in Example 1. Furthermore, the zirconium-containing cerium oxide with reversible oxygen deficiency was evaluated for carbon dioxide-to-carbon monoxide conversion in the same manner as in Example 1. The results are shown in Table 1.
XRD analysis of the zirconium-containing cerium oxides of Examples 2 and 3 revealed only the diffraction peak assigned to CeO₂ with no peaks assigned to ZrO₂, which indicated that the zirconium dissolved in solid state in cerium oxide.

### Examples 4 to 6

Zirconium-containing cerium oxide with no reversible oxygen deficiency and zirconium-containing cerium oxide with reversible oxygen deficiency were obtained in the same manner as in Example 1, except for changing the ratio of zirconium to the total number of moles of cerium and zirconium as shown in Table 1 and changing the firing conditions from 1400°C and 2 hours to 1500°C and 5 hours. The resulting zirconium-containing cerium oxide with no reversible oxygen deficiency was evaluated for T_{red} and T_{CO2} in the same manner as in Example 1. The zirconium-containing cerium oxide with reversible oxygen deficiency was evaluated for carbon dioxide-to-carbon monoxide conversion in the same manner as in Example 1. The results are shown in Table 1.
XRD analysis of the zirconium-containing cerium oxides of Examples 4 and 5 revealed that they were a mixture of cerium oxide having zirconium dissolved therein and zirconium oxide having cerium dissolved therein. In each of Examples 4 and 5, the zirconium content in the cerium oxide having zirconium dissolved therein was assumed to be about 35% from the lattice constant of the cerium oxide having zirconium dissolved therein (Example 4: 5.3205 A; Example 5: 5.3209 A) using Vegard's law, and the cerium content in the zirconium oxide having cerium dissolved therein was assumed to be about 37% from the a- and b-axis lattice constants of the zirconium oxide having cerium dissolved therein (tetragonal) (3.6482 Å in both Examples 4 and 5) using Vegard's law.
The XRD analysis of the zirconium-containing cerium oxide of Example 6 showed only a diffraction peak assigned to tetragonal ZrO₂ resulting from cerium dissolution with no diffraction peaks assigned to CeO₂, which indicated that cerium dissolved in zirconium oxide.

### Reference Example 1

Cerium carbonate octahydrate (from Wako Pure Chemical) was dried at 120°C for 12 hours to give cerium carbonate, which was ground in a mortar. The resulting powder was put in a heating furnace and fired under a flow of 0.5 L/min of air by heating from room temperature to 1400°C at a rate of 5°C/min, at which the heating was continued for 2 hours, followed by allowing to cool to obtain cerium oxide with no reversible oxygen deficiency. The resulting cerium oxide was strongly reduced under the same condition as in Example 1 to give cerium oxide with reversible oxygen deficiency.
The cerium oxide with no reversible oxygen deficiency was evaluated for T_{red} and T_{CO2} in the same manner as in Example 1. The cerium oxide with reversible oxygen deficiency was evaluated for carbon dioxide-to-carbon monoxide conversion in the same manner as in Example 1. The results obtained are shown in Table 1.

### Reference Example 2

The zirconium-containing cerium oxide with no reversible oxygen deficiency of Example 1 was evaluated as such (without being reduced with hydrogen) for carbon dioxide-to-carbon monoxide conversion. Furthermore, the zirconium-containing cerium oxide with no reversible oxygen deficiency was allowed to react with carbon dioxide as such (without being subjected to the step of forming reversible oxygen vacancies with a reducing gas) to determine T_{CO2}. The results are shown in Table 1.

**Table 1**

| | Zr/(Ce+Zr) (by mole number) | CO₂-to-CO Conversion | | T_{CO2}(°C) | T_{red}(°C) |
|---|---|---|---|---|---|
| | | Temperature of CO₂-to-CO Conversion (°C) | | | |
| | | 600 | 400 | | |
| Example 1 | 0.25 | pass | pass | 520 | 586 |
| Example 2 | 0.05 | pass | pass | 469 | 605 |
| Example 3 | 0.1 | pass | pass | 487 | 573 |
| Example 4 | 0.4 | pass | pass | 577 | 604 |
| Example 5 | 0.6 | pass | pass | 584 | 622 |
| Example 6 | 0.7 | pass | pass | 528 | 629 |
| Ref. Example 1 | 0 | pass | fail | not observed under the condition adopted | 770 |
| Ref. Example 2 | 0.25 | fail | fail | not observed under the condition adopted | not measured |

As is apparent from the results in Table 1, the converting agents of Examples 1 to 6 proved able to convert carbon dioxide to carbon monoxide. In particular, comparing the results at 400°C between Examples 1 to 6 and Reference Example 1 demonstrates that addition of zirconium to cerium oxide allows for production of carbon monoxide from carbon dioxide at a lowered temperature. The results of T_{CO2} prove that the conversion from carbon dioxide to carbon monoxide is achieved at a further lowered temperature when the ratio of the number of moles of zirconium to the total number of moles of cerium and zirconium is 0.25 or smaller. The results of T_{red} reveal that addition of zirconium to cerium oxide allows for creating oxygen vacancies at a lowered temperature. It is seen from the results of Reference Example 2 that zirconium-containing cerium oxide that is not treated to have reversible oxygen deficiency is incapable of reacting with carbon dioxide gas.

While not shown in Table 1, by-production of carbon was not observed in Examples 1 to 6.

### Example 7

The powdered zirconium-containing cerium oxide with no reversible oxygen deficiency obtained in Example 1 was used. The powder (9.37 g) and 0.58 g of bismuth nitrate pentahydrate were put in a 500 ml beaker and mixed with 300 ml of water. The mixture was stirred on a hot magnetic stirrer at 80°C to dissolve bismuth nitrate and then heated to evaporate water in the beaker. After evaporation, the residual powder was ground in a mortar. The resulting mixed powder was placed in a heating furnace and calcined in a flow of 0.5 L/min of air by heating from room temperature to 700°C at a rate of 5°C/min, at which the furnace was kept for 1 hours. The calcined product was ground again in a mortar. The resulting powder was placed in a heating furnace and fired under a flow of 0.5 L/min of air by heating from room temperature at a rate of 5°C/min up to 1000°C, at which the furnace was kept for 3 hours. After spontaneous cooling, the powder was ground in a mortar to give bismuth- and zirconium-containing cerium oxide with no reversible oxygen deficiency. Subsequently, bismuth- and zirconium-containing cerium oxide with reversible oxygen deficiency was obtained from the bismuth- and zirconium-containing cerium oxide with no reversible oxygen deficiency in the same manner as in Example 1. The bismuth- and zirconium-containing cerium oxide with no reversible oxygen deficiency of Example 7 was evaluated for T_{red} and T_{CO2} in the same manner as in Example 1. Furthermore, the bismuth- and zirconium-containing cerium oxide with reversible oxygen deficiency was evaluated for carbon dioxide-to-carbon monoxide conversion in the same manner as in Example 1. The results are shown in Table 2 below.

### Examples 8 to 10

In Example 8, bismuth- and zirconium-containing cerium oxide with no reversible oxygen deficiency and bismuth- and zirconium-containing cerium oxide with reversible oxygen deficiency were obtained in the same manner as in Example 7, except for replacing the zirconium-containing cerium oxide with no reversible oxygen deficiency obtained in Example 1 with the zirconium-containing cerium oxide with no reversible oxygen deficiency obtained in Example 4.
In Example 9, bismuth- and zirconium-containing cerium oxide with no reversible oxygen deficiency and bismuth- and zirconium-containing cerium oxide with reversible oxygen deficiency were obtained in the same manner as in Example 7, except for replacing the zirconium-containing cerium oxide with no reversible oxygen deficiency obtained in Example 1 with the zirconium-containing cerium oxide with no reversible oxygen deficiency obtained in Example 5.
In Example 10, bismuth- and zirconium-containing cerium oxide with no reversible oxygen deficiency and bismuth- and zirconium-containing cerium oxide with reversible oxygen deficiency were obtained in the same manner as in Example 7, except for replacing the zirconium-containing cerium oxide with no reversible oxygen deficiency obtained in Example 1 with the zirconium-containing cerium oxide with no reversible oxygen deficiency obtained in Example 6.
The bismuth- and zirconium-containing cerium oxide with no reversible oxygen deficiency obtained in each of Examples 8 to 10 was evaluated for T_{red} and T_{CO2} in the same manner as in Example 1. The bismuth- and zirconium-containing cerium oxide with reversible oxygen deficiency obtained in each of Examples 8 to 10 was evaluated for carbon dioxide-to-carbon monoxide conversion in the same manner as in Example 1. The results are shown in Table 2.

### Examples 11 to 14

Bismuth- and zirconium-containing cerium oxide with no reversible oxygen deficiency and bismuth- and zirconium-containing cerium oxide with reversible oxygen deficiency were obtained in the same manner as in Example 7, except for changing the ratio of bismuth to the total number of moles of cerium, zirconium, and bismuth as shown in Table 2. The resulting bismuth- and zirconium-containing cerium oxide with no reversible oxygen deficiency was evaluated for T_{red} and T_{CO2} in the same manner as in Example 1. The bismuth- and zirconium-containing cerium oxide with reversible oxygen deficiency was evaluated for carbon dioxide-to-carbon monoxide conversion in the same manner as in Example 1. The results are shown in Table 2.

As a result of XRD analysis, the bismuth- and zirconium-containing cerium oxide in each of Examples 7 to 12 showed no peaks assigned to Bi₂O₃, which indicated that the bismuth dissolved in solid state in cerium oxide or zirconium oxide. The bismuth- and zirconium-containing cerium oxides of Examples 13 and 14 showed diffraction peaks assigned to Bi₂O₃.

### Reference Example 3

The bismuth- and zirconium-containing cerium oxide with no reversible oxygen deficiency of Example 7 was evaluated as such (without being reduced with hydrogen) for carbon dioxide-to-carbon monoxide conversion. Furthermore, the bismuth- and zirconium-containing cerium oxide with no reversible oxygen deficiency was allowed to react with carbon dioxide as such (without being subjected to the step of forming reversible oxygen vacancies with a reducing gas) to determine T_{CO2}. The results are shown in Table 2.

**Table 2**

| | Zr/(Ce+Zr) (by mole number) | Bi/(Ce+Zr+-Bi) (by mole number) | CO₂-to-CO Conversion | | T_{CO2} (°C) | T_{red}(°C) |
|---|---|---|---|---|---|---|
| | | | Temp. of CO₂-to-CO Conversion (°C) | | | |
| | | | 600 | 400 | | |
| Example 7 | 0.25 | 0.02 | pass | pass | 480 | 410 |
| Example 8 | 0.4 | | pass | pass | 485 | 425 |
| Example 9 | 0.6 | | pass | pass | 515 | 460 |
| Example 10 | 0.7 | | pass | pass | 540 | 450 |
| Example 11 | 0.25 | 0.05 | pass | pass | 456 | 376 |
| Example 12 | | 0.1 | pass | pass | 425 | 351 |
| Example 13 | | 0.2 | pass | pass | 329 | 430 |
| Example 14 | | 0.3 | pass | pass | 295 | 450 |
| Ref. Example 3 | 0.25 | 0.02 | fail | fail | not observed under the condition adopted | not measured |

It can be seen from the results in Tables 1 and 2 that incorporating bismuth to zirconium-containing cerium oxide further lowers the temperature for conversion from carbon dioxide to carbon monoxide and the temperature for forming oxygen vacancies.
The results in Table 2 also reveal that the temperature for converting carbon dioxide to carbon monoxide decreases with an increase of the bismuth content in the bismuth- and zirconium-containing cerium oxide. Furthermore, Reference Example 3 demonstrates that bismuth- and zirconium-containing cerium oxide does not react with carbon dioxide when no reversible oxygen vacancies are generated therein.

While not shown in Table 2, by-production of carbon was not observed in any of Examples 7 to 14.

## Claims

1. A process for producing carbon monoxide comprising contacting a carbon dioxide-containing gas with a metal oxide having oxygen ion conductivity and reversible oxygen deficiency under heating thereby reducing carbon dioxide by a stoichiometric reaction and producing carbon monoxide, the metal oxide being cerium oxide containing zirconium.

2. The process according to claim 1, wherein the ratio of the number of moles of zirconium to the total number of moles of cerium and zirconium in the zirconium-containing cerium oxide is 0.001 to 0.5.

3. The process according to claim 2, wherein the metal oxide is cerium oxide having zirconium dissolved therein in solid state.

4. The process according to any one of claims 1 to 3, wherein the zirconium-containing cerium oxide further contains at least one dopant element selected from bismuth and alkaline earth metal elements, the ratio of the number of moles of the dopant element to the total number of moles of cerium, zirconium, and the dopant element being 0.001 to 0.3.

5. The process according to claim 4, wherein the at least one dopant element is bismuth.

6. The process according to any one of claims 1 to 5, wherein the carbon dioxide-containing gas is blast furnace gas or converter gas.

7. The process according to any one of claims 1 to 6, further comprising contacting the metal oxide having been oxidized by the contact with the carbon dioxide-containing gas with a reducing gas thereby regenerating the metal oxide.

8. The process according to claim 7, wherein the reducing gas is coke oven gas.

9. An apparatus for producing carbon monoxide comprising an outer tube and an inner tube disposed in the outer tube,
the inner tube being formed of a material comprising a metal oxide having oxygen ion conductivity and reversible oxygen deficiency,
the apparatus being configured to allow a carbon dioxide-containing gas to flow between the outer tube and the inner tube and to allow a reducing gas to flow through the inner tube or configured to allow a reducing gas to flow between the outer tube and the inner tube and to allow a carbon dioxide-containing gas to flow through the inner tube, and
the metal oxide being cerium oxide containing zirconium.

10. An apparatus for producing carbon monoxide comprising an alternate stack of at least one plate-shaped member formed of a material comprising a metal oxide having oxygen ion conductivity and reversible oxygen deficiency and at least one plate-shaped separator,
each side of each separator is provided with alternate ribs and grooves, each rib and each groove extending in one direction,
the apparatus being configured to allow a carbon dioxide-containing gas to flow through the grooves of one of the separators facing each other with the plate-shaped member therebetween, the groove being located on the side of the separator facing to the plate-shaped member and to allow a reducing gas to flow through the grooves of the other separator located on the side of the separator facing the plate-shaped member, and
the metal oxide being cerium oxide containing zirconium.

11. A system for converting carbon dioxide to carbon monoxide comprising:
contacting an exhaust gas containing carbon dioxide from a steel plant, a refinery, or a heat power plant with a metal oxide having oxygen ion conductivity and reversible oxygen deficiency under heating using waste heat generated from the steel plant, the refiner, or the heat power plant thereby reducing carbon dioxide in the exhaust gas by a stoichiometric reaction and producing carbon monoxide,
the metal oxide being cerium oxide containing zirconium.

12. The system according to claim 11, wherein the exhaust gas is blast furnace gas or converter gas.

13. The system according to claim 11 or 12, further comprising contacting the metal oxide having been oxidized by the contact with the carbon dioxide with a hydrogen-containing gas generated from the steel plant or the refiner thereby providing the metal oxide with reversible oxygen deficiency.

14. The system according to claim 13, wherein the hydrogen-containing gas is coke oven gas.

15. A converting agent for converting carbon dioxide to carbon monoxide comprising a metal oxide having oxygen ion conductivity and reversible oxygen deficiency, the metal oxide being cerium oxide containing zirconium.
